# EUROPEAN PATENT APPLICATION

(11) **EP 2 381 348 A1**
(43) Date of publication of application: **26.10.2011**
(21) Application number: 10160936.0
(22) Date of filing: 23.04.2010
(51) Int. Cl.: G06F 3/048, G06F 3/023, G06F 9/44, G06F 17/27

(54) **Electronic device including touch-sensitive input device and method of controlling same**

(71) Applicant: RESEARCH IN MOTION LIMITED, Waterloo, Ontario N2L 3W8 (CA)
(72) Inventor: Bells, Matthew, Waterloo Ontario N2L 5Z5 (CA); Lhotak, Jennifer Elizabeth, Waterloo Ontario N2L 5Z5 (CA); Pollock, Stuart Coleman Edmond, Waterloo Ontario N2L 5Z5 (CA)
(74) Representative: Roberts, Gwilym Vaughan

(57) **Abstract**

A method of controlling a portable electronic device includes rendering a first virtual keyboard corresponding to a first language on a touch-sensitive display of the portable electronic device, rendering a second selectable feature corresponding to a second language when the first virtual keyboard is rendered on the touch-sensitive display, detecting selection of the second selectable feature corresponding to the second language, and rendering a second virtual keyboard corresponding to the second language in response to detecting the selection.

## Description

### FIELD OF TECHNOLOGY

The present disclosure relates to portable electronic devices that include a touch-sensitive input device such as a touch-sensitive display and the provision of tactile feedback using such input devices.

### BACKGROUND

Electronic devices, including portable electronic devices, have gained widespread use and may provide a variety of functions including, for example, telephonic, electronic text messaging and other personal information manager (PIM) application functions. Portable electronic devices can include several types of devices including mobile stations such as simple cellular phones, smart phones, Personal Digital Assistants (PDAs), and laptop computers.

Devices such as PDAs or smart phones are generally intended for handheld use and ease of portability. Smaller devices are generally desirable for portability. Touch-sensitive devices constructed of a display, such as a liquid crystal display (LCD), with a touch-sensitive overlay are useful on such handheld devices as such handheld devices are small and are therefore limited in space available for user input and output devices. Further, the screen content on the touch-sensitive devices can be modified depending on the functions and operations being performed.

Improvements in devices with touch-sensitive displays are desirable.

### SUMMARY

According to one aspect, a method of controlling a portable electronic device includes rendering a first virtual keyboard corresponding to a first language on a touch-sensitive display of the portable electronic device, rendering a second selectable feature corresponding to a second language when the first virtual keyboard is rendered on the touch-sensitive display, detecting selection of the second selectable feature corresponding to the second language, and rendering a second virtual keyboard corresponding to the second language in response to detecting the selection.

According to another aspect, a computer-readable medium has computer-readable code embodied therein for execution by at least one processor in an electronic device having a touch-sensitive display to carry out the above method.

According to still another aspect, a portable electronic device includes a touch-sensitive display and at least one processor operably coupled to the touch-sensitive display to render a first virtual keyboard corresponding to a first language on a touch-sensitive display of the portable electronic device, render a second selectable feature corresponding to a second language when the first virtual keyboard is rendered on the touch-sensitive display, detect selection of the second selectable feature corresponding to the second language, and render a second virtual keyboard corresponding to the second language in response to detecting the selection.

### BRIEF DESCRIPTION OF THE DRAWINGS

Embodiments of the present disclosure will now be described, by way of example only, with reference to the attached Figures, in which:

FIG 1 is a simplified block diagram of components including internal components of a portable electronic device according an aspect of an embodiment;

FIG. 2 is a flow-chart illustrating a method of controlling a portable electronic device according to an embodiment

FIG 3 shows a series of examples of screen shots according to an aspect of an embodiment;

FIG. 4 shows an example of a screen shot according to another aspect of an embodiment;

FIG. 5 shows an example of a screen shot according to another aspect; and

FIG 6 shows an example of a screen shot according to another aspect.

### DETAILED DESCRIPTION OF EXAMPLE EMBODIMENTS

The following describes an electronic device and method of controlling the electronic device. The method may include rendering a first virtual keyboard corresponding to a first language on a touch-sensitive display of the portable electronic device, rendering a second selectable feature corresponding to a second language when the first virtual keyboard is rendered on the touch-sensitive display, detecting selection of the second selectable feature corresponding to the second language, and rendering a second virtual keyboard corresponding to the second language in response to detecting the selection.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, PDAs, wirelessly enabled notebook computers, and so forth. The portable electronic device may also be a portable electronic device without telephony communication capabilities, such as a handheld electronic game device, digital photograph album, digital camera, or other device.

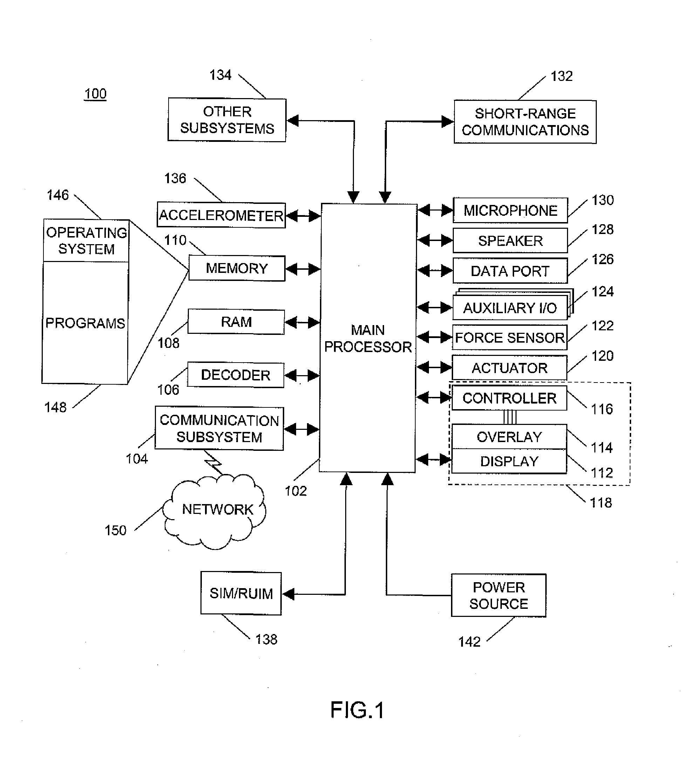

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact, or a point of contact including width information in both x and y axes, or a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected.

The actuator(s) 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 may result in provision of tactile feedback.

A mechanical dome switch actuator may be utilized. In this example, tactile feedback is provided when the dome collapses due to imparted force and when the dome returns to the rest position after release of the switch.

Alternatively, the actuator 120 may comprise one or more piezoelectric (piezo) devices that provide tactile feedback for the touch-sensitive display 118. Contraction of the piezo actuator(s) applies a force to the touch-sensitive display, for example, opposing a force externally applied to the touch-sensitive display 118. Each piezo actuator includes a piezoelectric device, such as a piezoelectric disk, adhered to a substrate, which may comprises metal. The substrate bends when the piezoelectric disk contracts due to build up of charge at the piezoelectric disk or in response to a force, such as an external force applied to the touch-sensitive display 118. The charge may be adjusted by varying the applied voltage or current, thereby controlling the force applied by the piezoelectric disks on the touch-sensitive display 118. The charge on the piezo actuator may be removed by a controlled discharge current that causes the piezoelectric disk to expand, releasing the force thereby decreasing the force applied by the piezoelectric disks. The charge may advantageously be removed over a relatively short period of time to provide tactile feedback to the user. Absent an external force and absent a charge on the piezoelectric disk, the piezoelectric disk may be slightly bent due to a mechanical preload.

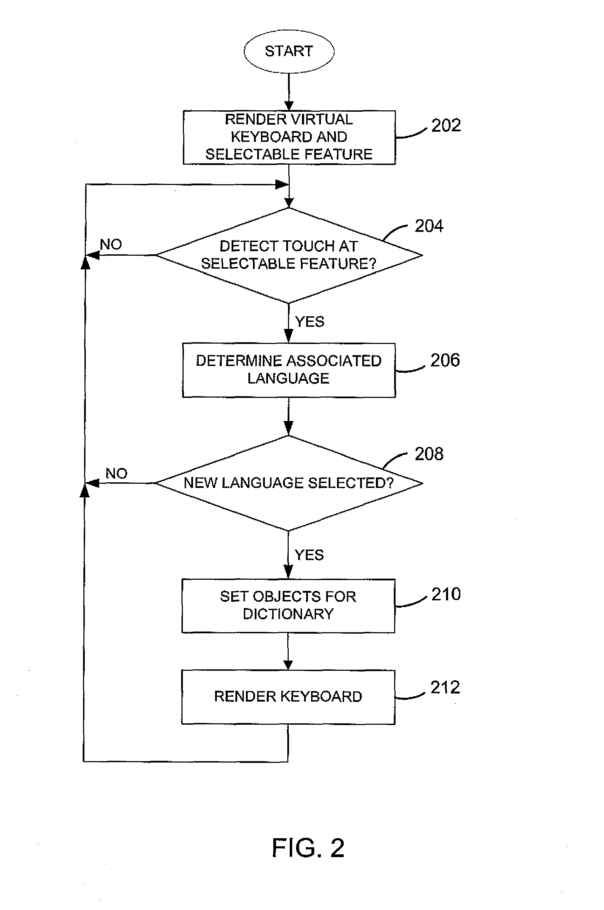

A flowchart illustrating a method of controlling an electronic device is shown in FIG. 2. The method may be carried out by software executed by, for example, the processor 102. Coding of software for carrying out such a method is within the scope of a person of ordinary skill in the art given the present description.

A user interface is provided by rendering a virtual keyboard for selecting characters on the touch-sensitive display 118 of the portable electronic device 100. The keyboard may be a full keyboard in which each alphabetical letter is associated with a respective virtual key or may be a reduced keyboard in which at least some of the virtual keys are associated with more than one character. For example, a reduced QWERTY keyboard may be provided in which the letters Q and W share a single key, the letters E and R share a single key, and so forth. The keyboard that is rendered on the touch-sensitive display is a keyboard that is associated with a language that is set at the portable electronic device 100 at the time the keyboard is rendered and may be, for example, an English keyboard, a French Keyboard, a German Keyboard, or any other suitable keyboard. In addition to the keyboard, selectable features are rendered that correspond to respective languages. The selectable features may be rendered as tabs, icons, keys, buttons or any other suitable feature for selection.

The keyboard and selectable features may be rendered 202 in any suitable application such as a web browser, contacts, email, calendar, music player, spreadsheet, word processing, operating system interface, and so forth. Other information such as text, characters, symbols, images, and other items may also be displayed, for example, as the virtual keyboard is utilized for data entry.

When a touch is detected 204 within a target area, on the touch-sensitive display 118, that corresponds to one of the selectable features rendered at 202, the process continues at 206 where the language, corresponding to the selectable feature at which the touch is detected 204. is determined 206. The language, corresponding to the selectable feature at which the touch is detected 204, is compared 208 to the language set at the portable electronic device 100 and that the keyboard, rendered at 202, is associated with. When the language corresponding to the selectable feature is the same as the language set at the portable electronic device 100, the process continues at 204. When the language corresponding to the selectable feature differs from the language set at the portable electronic device 100, the new language, which is the language corresponding to the selectable feature at which the touch is detected, is set and a set of objects, that correspond with the new language, are utilized by the portable electronic device 100. The set of objects include words or character strings stored in memory, such as the memory 110, and may be utilized in spell checking or text prediction or disambiguation or any combination of spell checking, text prediction, and disambiguation. The set of objects are utilized instead of utilizing objects that correspond with the previously set language. In this example, selecting a new language sets 210 a different set of character strings utilized for spell checking and text prediction.

A virtual keyboard, corresponding to the selected language, is rendered 212 on the touch-sensitive display 118, in place of the virtual keyboard rendered at 202. The keyboard may be a full keyboard in which each alphabetical letter is associated with a respective virtual key or may be a reduced keyboard in which at least some of the virtual keys are associated with more than one character.

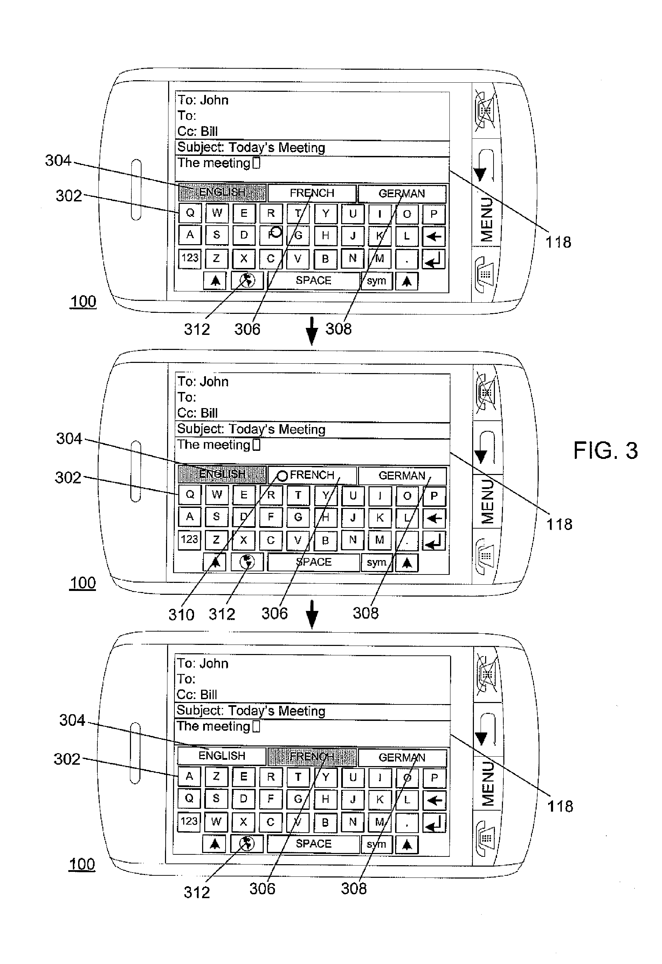

A series of examples of screen shots are shown in FIG. 3, for the purpose of illustrating a particular example in accordance with the present disclosure. A virtual keyboard 302, which in this example is an English, full QWERTY keyboard, is rendered 202 on the touch-sensitive display 118, as shown in the upper illustration of FIG. 3. Selectable features 304, 306, 308 that correspond to respective languages, are also rendered. The selectable features include the feature 304 labeled "ENGLISH", corresponding to the English language, the feature 306 labeled "FRENCH", corresponding to the French language, and the feature 308 labeled "GERMAN", corresponding to the German language. For the purpose of the present example, the keyboard 302 and selectable features 304, 306, 308 are rendered in an email application.

A touch 310 is detected 204 within the target area, on the touch-sensitive display 118, that corresponds to the selectable feature 306 corresponding with the French language and the associated language, which is French, is determined 206. The touch 310 is shown in the middle illustration of FIG. 3. Based on a comparison 208, a determination is made that the selected language is new, as compared to the previously selected language, and French words stored in the memory 110 are set 210 for use in spell-checking and text prediction. A virtual, French keyboard is rendered 212 on the touch-sensitive display 118, as shown in the lower illustration of FIG. 3.

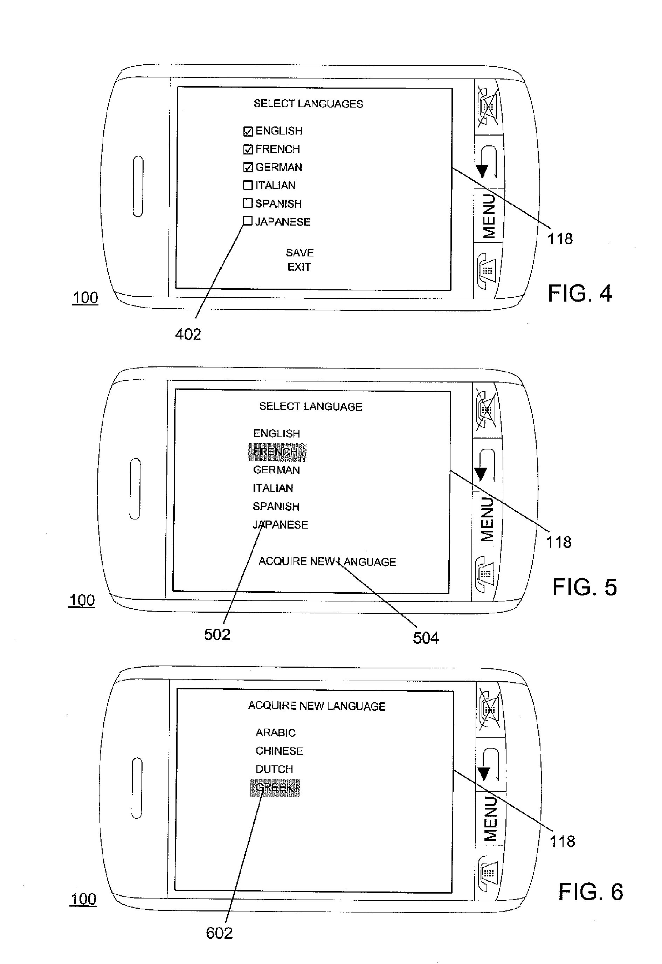

FIG. 4 shows an example of a screen shot according to another aspect of an embodiment. The languages for which selectable features are rendered on the touch-sensitive display 118 may be determined based on selections from multiple options in, for example, a menu on the portable electronic device 100. An example of a menu including a list 402 of language options is shown in FIG. 4. Any one of the language options may be selected or deselected, for example, by touching the language option or a corresponding one of the adjacent check boxes. In the example shown in FIG. 4, the languages English, French and German are selected. Any other suitable method selection of languages may also be utilized. Alternatively, the languages may be preset. The data for rendering the virtual keyboard and the objects stored in memory may be stored on the portable electronic device 100 or may be downloaded upon selection, for example.

In the examples shown in FIG. 3, three tabs are rendered above the keyboard and each tab corresponds with a selectable language. In an alternative example, a single selectable button such as the icon 312 shown in FIG. 3, may be provided such that, when selected, a list of selectable languages is provided, such as the list 502 shown in FIG. 5. In the present example, selection of any one of the languages sets the language of the portable electronic device 100 to the language selected. For example, selection of the "French" language sets the language to French. The portable electronic device 100 returns to the previously displayed interface, such as the email composition interface, with the French keyboard rendered, and sets the dictionary language to French. The language at which the touch is detected, is selected and a further selection of a save or exit option is not required, thereby improving the interface and saving device use time and power.

Optionally, a selectable option 504 to acquire a new language may be provided. Selection of the option 504 results in the portable electronic device 100 acquiring a list of available languages, such as the list 602 shown in FIG.6, for downloading from, for example, a host server. In response to selection of any one of the available languages, the language is requested by the portable electronic device 100 and sent from the host server to the portable electronic device. The new language sent includes data for a corresponding virtual keyboard and a corresponding dictionary. The new language is also set as the language on the portable electronic device.

The virtual keyboard layout may differ for different languages and may differ from those shown in the examples of FIG. 3. In particular, the number of keys and the location of keys on the touch-sensitive display may differ.

In another example, a button may be selected to reveal the languages that may be selected. In this example, the selectable features corresponding with languages may be hidden until a virtual button is selected to cause the features to be displayed.

The selectable features for setting a language and the corresponding virtual keyboard facilitate selection of various languages and switching between the languages at the portable electronic device 100. The selectable features and a keyboard corresponding to one of the languages may be rendered on the display in a single screen, without requiring rendering of additional screens, menus or submenus. Thus, a switch may be made between languages utilizing fewer screens or menus and therefore requiring less device use time and consuming less power as fewer screens are rendered in switching languages. Further, the words used in, for example, spell checking or text prediction, may be changed to words when a new language is selected.

While the embodiments described herein are directed to particular implementations of the portable electronic device and the method of controlling the portable electronic device, it will be understood that modifications and variations may occur to those skilled in the art. All such modifications and variations are believed to be within the sphere and scope of the present disclosure.

## Claims

1. A method of controlling a portable electronic device, the method comprising:
rendering a first virtual keyboard corresponding to a first language on a touch-sensitive display of the portable electronic device;
rendering a second selectable feature corresponding to a second language when the first virtual keyboard is rendered on the touch-sensitive display;
detecting selection of the second selectable feature corresponding to the second language;
rendering a second virtual keyboard corresponding to the second language in response to detecting the selection.

2. The method according to claim 1, wherein the selectable feature corresponding to the second language is one of a plurality of selectable features corresponding to a plurality of languages rendered on the touch-sensitive display when the first virtual keyboard is rendered.

3. The method according to claim 2, wherein the selectable features comprise selectable tabs rendered near the first virtual keyboard.

4. The method according to claim 1, comprising rendering a first selectable feature corresponding to the first language when the first language is rendered on the touch-sensitive display.

5. The method according to claim 1, comprising utilizing a second set of objects, stored in memory, in response to detecting the selection, the second set of objects corresponding to the second language.

6. The method according to claim 5, wherein utilizing the second set of objects comprises discontinuing utilizing a first set of objects stored in memory, the first set of objects corresponding to the first language.

7. The method according to claim 6, wherein the second set of objects are utilized to check spelling of character strings entered at the portable electronic device.

8. The method according to claim 6, wherein the first set of objects are utilized to check spelling of character strings entered at the portable electronic device.

9. The method according to claim 6, wherein the second set of objects are utilized to predict a next character in a string of characters entered utilizing the second keyboard.

10. The method according to claim 6, wherein the first set of objects are utilized to predict a next character in a string of characters entered utilizing the first keyboard.

11. The method according to claim 1, wherein detecting selection comprises detecting a touch at a location on the touch-sensitive display that is associated with the second selectable feature.

12. The method according to claim 1, comprising providing at least one menu option to select a further language for which to render a further corresponding selectable feature.

13. The method according to claim 1, comprising providing at least one menu option to deselect at least one of the first language and the second language for which corresponding first and second selectable features are rendered.

14. A computer-readable medium having computer-readable code embodied therein for execution by at least one processor in an electronic device having a touch-sensitive display to carry out the method according to claim 1.

15. A portable electronic device comprising:
a touch-sensitive display; and
at least one processor operably coupled to the touch-sensitive display to render a first virtual keyboard corresponding to a first language on a touch-sensitive display of the portable electronic device, render a second selectable feature corresponding to a second language when the first virtual keyboard is rendered on the touch-sensitive display, detect selection of the second selectable feature corresponding to the second language, and render a second virtual keyboard corresponding to the second language in response to detecting the selection.

## Amended claims

### Amended claims in accordance with Rule 137(2) EPC.

**1.** A method of controlling a portable electronic device (100), the method comprising:
rendering a first virtual keyboard corresponding to a first language of a plurality of languages on a touch-sensitive display (118) of the portable electronic device (100);
rendering a plurality of selectable features corresponding to the plurality of languages when the first virtual keyboard is rendered on the touch-sensitive display (118);
detecting selection of one of the plurality of selectable features corresponding to a second language;
rendering a second virtual keyboard corresponding to the second language in response to detecting the selection.

**2.** The method according to claim 1, wherein the selectable features comprise selectable tabs rendered near the first virtual keyboard.

**3.** The method according to claim 1, wherein one of the plurality of selectable features corresponds to the first language when the first language is rendered on the touch-sensitive display (118).

**4.** The method according to claim 1, comprising utilizing a second set of objects, stored in memory (110), in response to detecting the selection, the second set of objects corresponding to the second language.

**5.** The method according to claim 4, wherein utilizing the second set of objects comprises discontinuing utilizing a first set of objects stored in memory (110), the first set of objects corresponding to the first language.

**6.** The method according to claim 5, wherein the second set of objects are utilized to check spelling of character strings entered at the portable electronic device.

**7.** The method according to claim 5, wherein the first set of objects are utilized to check spelling of character strings entered at the portable electronic device.

**8.** The method according to claim 5, wherein the second set of objects are utilized to predict a next character in a string of characters entered utilizing the second keyboard.

**9.** The method according to claim 5, wherein the first set of objects are utilized to predict a next character in a string of characters entered utilizing the first keyboard.

**10.** The method according to claim 1, wherein detecting selection comprises detecting a touch at a location on the touch-sensitive display (118) that is associated with one of the plurality of selectable feature.

**11.** The method according to claim 1, comprising providing at least one menu option to select a further language for which to render a further corresponding selectable feature.

**12.** The method according to claim 1, comprising providing at least one menu option to deselect at least one of the first language and the second language for which corresponding selectable features are rendered.

**13.** A computer-readable medium having computer-readable code embodied therein for execution by at least one processor (102) in an electronic device having a touch-sensitive display to carry out the method according to any of claims 1 to 12.

**14.** A portable electronic device (100) comprising:
a touch-sensitive display (118); and
at least one processor (102) operably coupled to the touch-sensitive display (118) to render a first virtual keyboard corresponding to a first language on a touch-sensitive display (118) of the portable electronic device (100), render a plurality of selectable features corresponding to a plurality of languages when the first virtual keyboard is rendered on the touch-sensitive display (118), detect selection of one of the plurality of selectable features corresponding to a second language, and render a second virtual keyboard corresponding to the second language in response to detecting the selection.
